# EUROPÄISCHE PATENTSCHRIFT

(11) **EP 2 223 473 B1**
(45) Veröffentlichungstag und Bekanntmachung des Hinweises auf die Patenterteilung: **18.09.2013**
(21) Anmeldenummer: 08851812.1
(22) Anmeldetag: 28.10.2008
(51) Int. Cl.: H04L 12/417

(54) **KOMMUNIKATIONSBAUSTEIN, NETZWERK MIT EINEM SOLCHEN KOMMUNIKATIONSBAUSTEIN UND VERFAHREN ZUM BETRIEB**
COMMUNICATION COMPONENT, NETWORK COMPRISING SUCH A COMMUNICATION COMPONENT AND METHOD FOR OPERATION
COMPOSANT DE COMMUNICATION, RÉSEAU DOTÉ D'UN COMPOSANT DE COMMUNICATION ET PROCÉDÉ DE FONCTIONNEMENT

(30) Priorität: 21.11.2007 CH 17972007
(43) Veröffentlichungstag der Anmeldung: 01.09.2010
(73) Patentinhaber: Metaphysics SA, 1450 Sainte Croix (CH)
(72) Erfinder: VOCKENHUBER, Peter, CH-1423 Villars-Burquin (CH)
(74) Vertreter: PATWIL AG
(86) Internationale Anmeldenummer: PCT/CH2008/000453
(87) Internationale Veröffentlichungsnummer: WO 2009/065236

(56) Entgegenhaltungen:
- EP-A2- 0 725 515
- US-A- 4 593 154
- US-A- 5 787 258

## Beschreibung

Die vorliegende Erfindung bezieht sich auf ein Verfahren zum Betrieb eines Netzwerkes nach dem Oberbegriff des Anspruches 1.

Netzwerke bezeichnen die Verbindung verschiedener Prozessorelemente (im weiteren PE genannt) durch einen Kommunikationskanal, über den Information zwischen den PE ausgetauscht werden kann. Es sind verschiedene Netzwerke bekannt, über die Daten in Form von Paketen versandt werden. Netzwerke können in Form eines Busses ausgeführt sein, wobei das physikalische Medium, über das die Daten übertragen werden allen PE gemeinsam ist (z.B. durch eine gemeinsame, ununterbrochene Leitung). Bussysteme weisen jedoch den Nachteil auf, dass ein Fehler im allen PE gemeinsamen Übertragungsmedium zu einem Totalausfall der Kommunikation führt.

Eine andere gebräuchliche Anordnung besteht aus einer Leitung, die an jedem PE unterbrochenen ist, sodass das PE jeweils einen Eingang und einen Ausgang zur Datenübertragung aufweist. Derartige Netze können im Ring verlegt werden, sodass die Datenleitung von einem Ausgang eines PE zum Eingang des nächsten PE gelegt wird, und, nachdem alle PE verbunden wurden, der Datenausgang des letzten PE wieder an den Eingang des ersten PE geführt wird. *Ein Beispiel einer- allerdings nur in einer einzigen Richtung betriebenen - Ringschaltung ist der* EP-A-0 725 515 *zu entnehmen.*

Diese Topologie ermöglicht es auf einfache Weise, den Datenverkehr zu sichern. Dies kann auf verschiedene Weise erfolgen, etwa indem der Versender wartet, bis die Daten durch den Ring verschickt wurden. Der Empfänger markiert die empfangenen Daten als 'konsumiert' und der Versender kann Datenintegrität und die Bestätigung der Datenübergabe kontrollieren. Bei einem Fehler kann der Versand beispielsweise wiederholt werden. Die Ring-Topologie weist den Vorteil auf, dass sich ein Fehler im physikalischen Übertragungsmedium (z.B. Leitungsunterbruch oder Kurzschluss) nur auf das gestörte Segment auswirkt. Allerdings kann dann die Kontrolle der Datenintegrität und der Datenübergabe nicht mehr erfolgen.

Neben der Ring- Topologie sind auch mehrfach vernetzte, und damit komplizierte, Topologien bekannt, wobei mehrere Ein/Ausgänge eines PE dieses mit mehreren anderen PE verbindet.

Natürlich kann bei der folgenden Betrachtung das Übertragungsmedium auf jeder denkbaren physikalischen Grundlage beruhen. In Frage kommen beispielsweise Datenleitungen, Glasfaserleitungen, Funkübertragungen usw. Weiter kann natürlich zwischen Segmenten, die aus einem PE und einer Datenleitung bestehen, eine beliebige Anzahl von Signalformern (,repeater') oder Verstärkern geschaltet werden. Wenn im weiteren von einer Datenleitung gesprochen wird, soll damit ein Informationskanal gemeint sein, der über ein beliebiges Netz läuft, beispielsweise über Kupferleitungen, Glasfaserleitungen, das Internet, über Telefon, über Satelliten-Relaisstationen, Ethernet oder andere Netzwerke.

Allen diesen Netzwerken ist gemeinsam, dass die Datenintegritätskontrolle und die Datenübergabebestätigung bei einem Ausfall eines Segments im Übertragungsmedium nicht mehr möglich sind. Dabei führen Ausfälle im physikalischen Medium, in Relais Netzen bzw. sogenannten Repeatern oder in einem PE zum Ausfall des gesamten Netzwerks. Natürlich kann die Ausfallsicherheit auch durch redundante Übertragungsleitungen (bzw. -Kanäle) erreicht werden, wobei im gestörten Fall auf den zweiten, redundanten zurückgegriffen wird. Damit sind jedoch beträchtliche Kosten verbunden, da Leitungen und Leitungstreiber jeweils doppelt vorhanden sein müssen. Darüber hinaus besteht ein Problem darin, dass der Ausfall eines PE selbst zum Ausfall des gesamten Systems führen kann.

Dieses Problem hat zu einem Verfahren geführt, wie es in der US-A-4,593,154 beschrieben ist, und dessen Merkmale sich im wesentlichen im Oberbegriff des Anspruches 1 widerspiegeln. Dabei können Kommunikationsbausteine ähnlich jenen benutzt werden, die in der US-A-5,787,258 beschrieben sind. Nachteilig ist aber an diesem bekannten Verfahren, dass zwar die Erkennung eines Leitungsunterbruchs durch das empfangende Element erfolgt, weil es in einer vorgegebenen Zeit keine Daten empfängt, dass aber die Umschaltungsart einen synchronen Datenfluss voraussetzt, in dem immer dieselbe Anzahl von Bits bzw. Bytes übertragen wird. Wünschenswert wäre dagegen ein Datenfluss bei dem die Datenmenge frei ist. Dazu ist es bei diesem Verfahren nicht möglich, dass sich das Netz im Fehlerfall selbst konfigurieren kann, vielmehr muss erst die Bruchstelle lokalisiert werden, wozu die Zahl der Bausteine im Netzwerk codiert sein muss. Auch führt beim Übergang vom Ringbetrieb in eine Kette kein Weg mehr zurück, vielmehr muss das System erst in einen fehlertoleranten Zustand zurückgebracht werden - der Übergang von einer Kette zu einem Ring ist nicht möglich.

Der Erfindung liegt daher die Aufgabe zugrunde, die Beschränkungen, die durch das bekannte Verfahren gegeben sind, zu vermeiden und ein verbessertes Verfahren mit mehr und einfacheren Möglichkeiten zu schaffen. Dies gelingt durch die kennzeichnenden Merkmale des Anspruches 1.

Wenn dabei von Zufallszahlen die Rede ist, so können diese von einem Zufallsgenerator stammen, es können aber auch schon bei der Produktion zufällig gewählte oder laufende Zahlen sein.

Die Übertragung im Ring erfolgt dabei in der Regel im ungestörten Fall. Wenn dann ein Segment der Übertragungsleitung ausfällt, wird es nicht mehr verwendet, und das System kommuniziert in einer Kettentopologie weiter. Dabei ist keinerlei Redundanz an Leitungen oder Leitungstreibern nötig, sondern es muss nur der Richtungssinn der Kommunikation zu bestimmten Zeiten umgeschalten werden. Was den materiellen Aufbau einer Datenübertragungsleitung betrifft, fallen daher im Vergleich zu einem konventionellen Datenübertragungssystem nur unwesentliche Mehrkosten an.

Insbesondere können normale, handelsübliche Leitungstreiber und UART (Universal Asynchronous Receiver Transmitter) im Kommunikationsbaustein ohne Modifikation verwendet werden. Alternativ sind auch sog. USRT (also Universal Synchronous Receiver Transmitter) einsetzbar, obwohl UARTs bevorzugt sind. Es muss einzig die Umschaltung des Richtungssinnes der Kommunikation von jedem PE gesteuert werden. Die dazu nötige Logik sollte in allen PE genau gleich und gleichzeitig ablaufen. Dies kann entweder in einem Mikroprozessor erfolgen oder in einem eigenen Baustein, der beispielsweise die Funktion des UART und eines Mikroprozessors vereint.

Im Vergleich mit konventionellen Übertragungssystemen hat dies zur Folge, dass keine wesentlichen materiellen Kosten anfallen, da die Steuerung des Richtungssinnes der Kommunikation durch Software gelöst werden kann, die keine Produktionskosten verursacht.

Wenn das Netzwerk in der als bevorzugt angegebenen Weise des Anspruches 4 ausgebildet ist, dann dient dies dazu, Fehlertoleranz im Störungsfall zu realisieren, wobei alle PE von einer Ring-Betriebsart in eine Ketten-Betriebsart umgeschaltet werden.

Wird allerdings die in Anspruch 4 unter "insbesondere" angegebene Ausführung gewählt, dann dient dies dem Zwischenspeichern der Telegramme an den reflektierenden Enden einer Kette von PE, die sich alle in der Ketten-Betriebsart befinden, die durch regelmässigen Richtungswechsel gekennzeichnet ist.

Die Ausbildung des Kommunikationsbausteines nach Merkmal a) des Anspruches 2 bzw. sein Betrieb im Sinne des Verfahrensanspruches 9 stellt jeweils sicher, dass ein externes Gerät alle Teilnehmer einer erfindungsgemäss vernetzten Menge PE adressieren kann.

Die Ausbildung des Kommunikationsbausteines nach Merkmal c) des Anspruches 2 bzw. sein Betrieb im Sinne des Verfahrensanspruches 10 (erste Alternative) haben jeweils zum Ziel, bei einer geschlossenen Ringstruktur ein einziges PE als Master der Anordnung zu identifizieren, das dann die weitere Kommunikation steuert.

Die zweite Alternative des Anspruches 10 stellt dagegen sicher, dass sich Teilketten aus PE selbsttätig zu grösseren Ketten zusammenschliessen.

Wird die Kettenidentifikationszahl **CID** dazu verwendet, um das Schliessen der Kette auf sich selbst zu einem Ring durch einen Kommunikationskanal zu erkennen, dann stellt man damit sicher, dass sich eine Kette aus PE, deren Anfang und Ende verbunden wird, selbsttätig zu einem Ring schliesst, wobei alle PE von der Ketten-Betriebsart in die Ring-Betriebsart übergehen.

Weitere Einzelheiten der Erfindung ergeben sich an Hand der nachfolgenden Beschreibung von in der Zeichnung schematisch dargestellten Ausführungsbeispielen. Es zeigen:
- Fig. 1: das Schaltschema eines erfindungsgemässen Kommunikationsbausteins;
- Fig. 2: die im weiteren verwendete Symbolik;
- Fig. 3: Datentransfer und Kommunikationsaufbau im Netzwerk im ungestörten Fall für einen Ring;
- Fig. 4: Datentransfer und Kommunikationsaufbau im Netzwerk im ungestörten Fall für eine Kette;
- Fig. 5a: und 5b die Adressentabelle NAT, mit deren Hilfe Prozessorelemente untereinander kommunizieren; und die
- Fig. 6: die Vorgangsweise zur Bildung längstmöglicher Ketten.

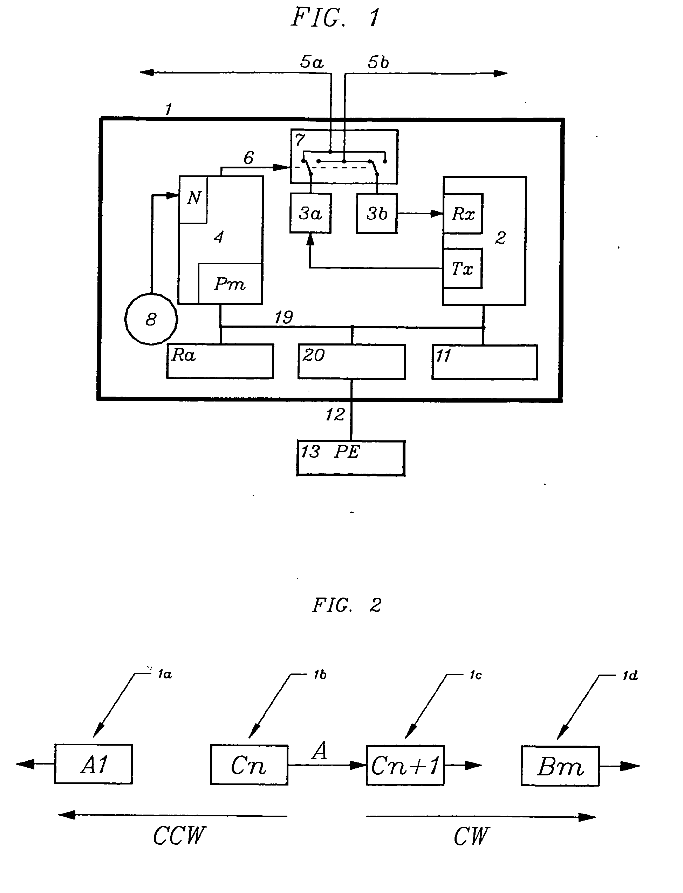

In Fig.1 wird eine bevorzugte Ausführungsart eines Kommunikationsbausteines 1 nach der Erfindung beschrieben, der sich gegenüber der Aussenwelt über eine Schnittstelle 12 darstellt, welche Signale von einem äusseren Prozessor 13 erhalten kann, beispielsweise einem Mikroprozessor. Diese Schnittstelle 12 kann ähnlich oder genau so ausgeführt sein, wie die eines herkömmlichen UART-Bausteins. Für diese Schnittstelle wird zweckmässig ein Schnittstellentreiber 20 vorgesehen sein.

Einer der Vorteile der vorliegenden Erfindung besteht in der Tatsache, dass sie mit einem Standard-UART Baustein 2 realisiert werden kann, wobei auch die Schnittstelle 12 kompatibel mit diesem Baustein ist. Es wurde oben aber bereits hervorgehoben, dass die Erfindung nicht auf die Verwendung eines (asynchronen) UART-Bausteines 2 beschränkt ist, vielmehr kann jeder andere, äquivalente Baustein verwendet werden, beispielsweise auch ein (synchroner) USRT-Baustein. In jedem Falle wird dieser Baustein 2 ein Senderegister Tx und ein Empfangsregister Rx zum Speichern von Informationen aufweisen, wobei weitere Speicher innerhalb des Kommunikationsbausteines 1 vorgesehen sein können. In der weiteren Beschreibung wird nur auf die Sende- (*Tx*) und Empfangsregister (Rx) des UART Bezug genommen, wobei davon ausgegangen wird, dass dem Fachmann die Funktionsweise dieses Bausteins hinreichend bekannt ist.

Der Inhalt des Senderegisters Tx wird sequentiell an einen Leitungstreiber 3a ausgegeben bzw. werden die Daten einer Ausgangsleitung 5a bzw. 5b durch einen Leitungstreiber 3b an den Eingang des UART und damit zum Empfangsregister Rx geleitet. Auf diese Weise kann mit einem Kommunikationsbaustein 1 gemäss der vorliegenden Erfindung in einem normalen asynchronen oder synchronen seriellen Duplex-Verfahren kommuniziert werden, wobei beispielsweise die Leitung 5a ausgehende Daten überträgt und die Leitung 5b hereinkommende Daten empfängt.

Es wurde oben erwähnt, dass die Register Rx und Tx nicht die einzigen Speicher zu sein brauchen, welche in dem Kommunikationsbaustein 1 enthalten sind. In der Folge wird noch ein Programmspeicher Pm erwähnt, welcher zweckmässig in einer Steuerstufe 4 enthalten ist, selbstverständlich aber auch separat vorgesehen sein kann. Ferner wird es vorteilhaft sein, wenn ein Datenspeicher 11, etwa zum Speichern der Adresse, von Codes und anderer Daten vorgesehen ist.

Den Leitungstreibern 3a, 3b ist eine Umschaltstufe 7 nach- bzw. vorgeschaltet, und zwar in der Weise, dass die Sendesignale von der Leitungstreiberstufe 3a wahlweise an die Leitung 5a oder 5b gelegt werden können bzw. umgekehrt die an die Leitungstreiberstufe 3b gelangenden Eingangssignale wahlweise von der Leitung 5a oder 5b kommen. Diese Schaltstufe 7 ist im vorliegenden Fall jeweils in einer festen Stellung (wie in Fig.1 gezeichnet), die während der Datenübertragung nicht verändert wird. Dabei wird der durch die Stellung der Schaltstufe 7 bestimmte Richtungssinn der Datenübertragung über eine Ausgangsleitung 6 einer Steuerstufe 4 bestimmt. Dazu ist die Steuerstufe mit einem Programmspeicher Pm versehen.

So kann die Steuerstufe 4 die Schalterstellung der Umschaltstufe 7 unverändert lassen und die über die Leitungen 5a bzw. 5b empfangenen Daten unverändert an die Schnittstelle 12 durchschieben, so dass der aussen angeschlossene Prozessor 13 mit den an die Leitungen 5 angeschlossenen Geräten im normalen Duplex-Verfahren kommunizieren kann. Dies stellt einen weiteren Vorteil der Erfindung dar, weil dadurch eine normale Punkt-zu-Punkt-Verbindung mit einem handelsüblichen Gerät aufbaubar ist, das nicht mit einem erfindungsgemässen Kommunikationsbaustein 1 ausgerüstet zu sein braucht, also als Standard-Kommunikationsbaustein 2 ausgebildet ist. So kann ein vereinzelter Kommunikationsbaustein, der diese Situation nach dem Aufstarten detektiert (weil er aus keiner Richtung Nachrichten erhält), in einen Programmzustand Z geschaltet werden, in dem er alle vom angeschlossenen Prozessor 13 erhaltenen Informationen durchschiebt und auch ebenso mit der über eine der Leitungen 5 erhaltenen Information an die Schnittstelle 12 übergibt.

Das im Speicher Pm gespeicherte Programm errechnet die Schalterstellung der Schaltstufe 7 des Kommunikationsbausteines 1, indem es zu regelmässigen Zeitpunkten über einen im Kommunikationsbaustein 1 vorhandenen Datenbus 19 das Empfangsregister Rx des UART 2 abfrägt, wobei kontrolliert wird, ob in diesem Register Rx zu regelmässigen Zeitpunkten standardisierte Daten eines gewissen Typs (Token) hereinkommen. Je nach Typ des Tokens wird die Schalterstellung der Stufe 7 unverändert belassen (Ring-Anordnung, Tokentyp "R"), oder nach Empfang die Richtung des Schalters der Schaltstufe 7 gedreht (Ketten-Anordnung, Tokentyp "A" oder "B"). Wenn dabei von einem "Schalter" die Rede ist, so versteht es sich, dass es sich hier nicht um einen körperlichen Schalter zu handeln braucht, sondern dass vielmehr die Schaltfunktion von Bedeutung ist, welche ja auch mittels Software erreicht werden kann.

Natürlich kann die Umschaltung des Richtungssinnes auch dadurch erfolgen, dass gar kein Schalter verwendet wird, sondern dass Bausteine als Leitungstreiber 3a und 3b verwendet werden, die neben dem Zustand "Senden" bzw. "Empfangen" auch einen Zustand aufweisen, in dem sie in eine hohe Impedanz geschaltet sind und daher den an ihren Eingängen anliegenden Datenstrom nicht stören. Solche Bustreiber-Bausteine sind dem Fachmanne wohlbekannt und haben in Bussystemen (z.B. RS485) weite Verbreitung gefunden. Derartige Bausteine kann man, wie dem Fachmann bekannt, durch ein Signal über die Ausgangsleitung 6 der Steuerstufe 4 so konfigurieren, dass eine der Schaltfunktion der Fig. 1 äquivalente Funktion resultiert.

Kommt es während einer Zeitspanne zu einer gewissen Mindestdauer, während welcher kein Token empfangen wurde, dann wird daraus geschlossen, dass die jeweils empfangende Übertragungsleitung 5a oder 5b gestört bzw. unterbrochen ist, und das im Programmspeicher Pm gespeicherte Programm führt denselben Algorithmus aus, der auch bei einem sogenannten Kaltstart, nämlich beim Anlegen der Versorgungsspannung, ausgeführt wird. Um diese Mindestdauer zu erfassen, liegt an der Steuereinrichtung 4 ein Taktgeber 8 an, dessen Taktsignale in der Steuereinrichtung 4, beispielsweise in einem Zähler N, erfasst werden, um so die Zeit zu ermitteln.

Eine weitere vorteilhafte Ausbildung liegt darin, dass der Kommunikationsbaustein 1 einen Zufallszahlengenerator Ra besitzt, der als gesonderter Bauteil inkorporiert sein kann, vorzugsweise aber Bestandteil der Steuerstufe 4 ist. Der Zweck dieses Zufallsgenerators wird später erläutert, doch sei so viel gesagt, dass alternativ dazu jedem Kommunikationsbaustein 1 schon bei der Produktion eine zufällig gewählte oder laufende Zahl zugeordnet und in einem der Speicher, z.B. im Datenspeicher 11 oder in einem gesonderten Speicher, abgespeichert werden kann. Allerdings führt dies zu relativ langen Zahlen, von 64, 128 oder mehr Bit, weshalb die Verwendung des Generators Ra bevorzugt ist. Eine andere Alternative läge darin, dass der Zufallszahlengenerator Ra nicht Bestandteil des Kommunikationsbausteines 1 ist, sondern beispielsweise nur einen Anschluss an den Bus 19 besitzt, wie im Beispiel der Fig. 1 gezeigt ist.

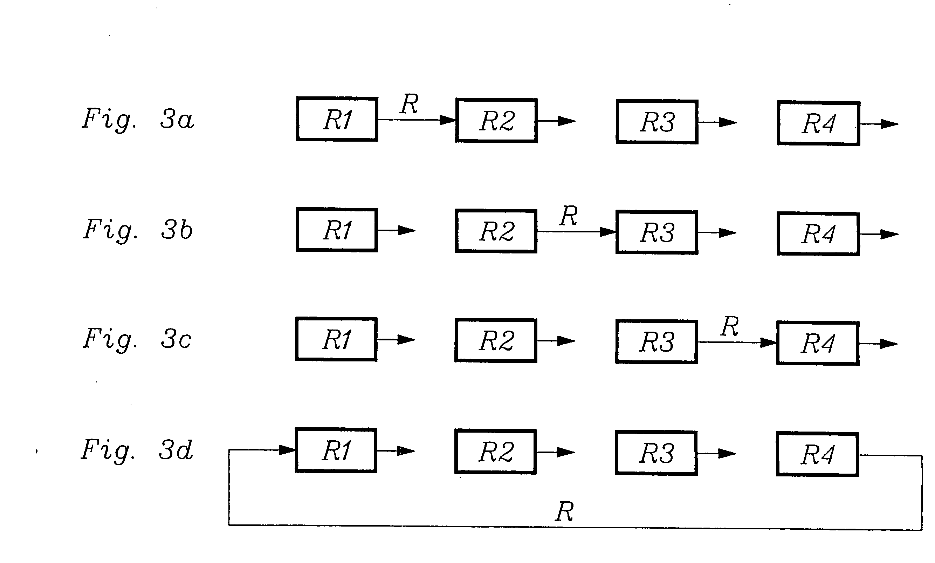

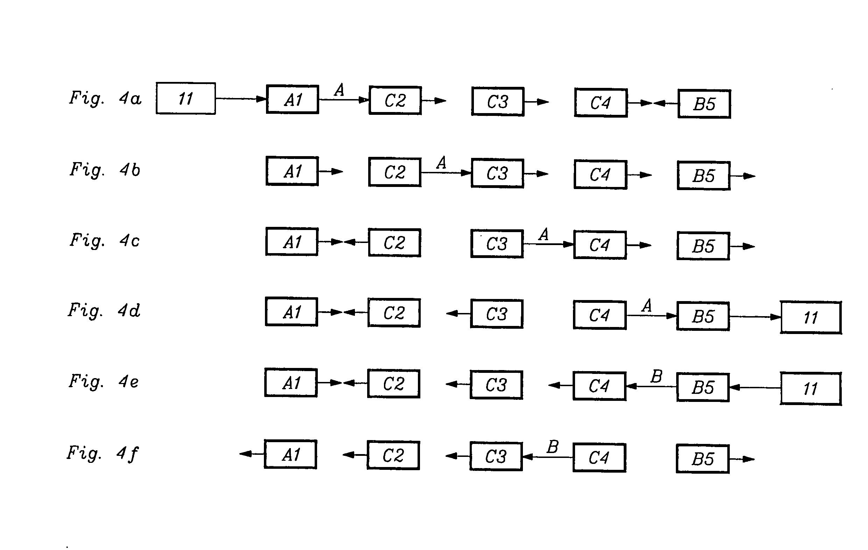

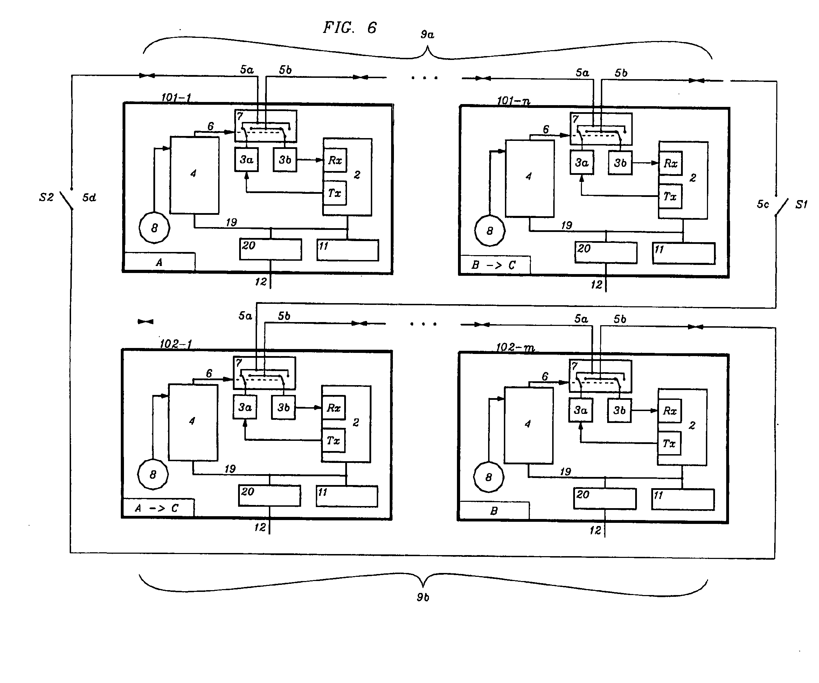

Wie besonders aus den Fig.3 und 4 ersichtlich ist, wird in einem Netzwerk zwar mindestens ein solcher Kommunikationsbaustein 1 vorhanden sein, doch sind es vorzugsweise mehrere, die entweder in einer Kette oder in einem Ring verbunden sind. Beim Auftreten einer Störung werden daher alle diese Kommunikationsbausteine die Störung etwa zur selben Zeit detektieren und können sich untereinander durch Umschalten der Kommunikationsrichtung synchronisieren. Da dabei derselbe Algorithmus aus dem Programmspeicher Pm ausgeführt wird, wie er auch beim schon erwähnten Kaltstart abläuft, kann erreicht werden, dass sich auch alle PE 13 (gleichgültig welcher Art) mit den Kommunikationsbausteinen 1 synchronisieren. Dadurch wird erreicht, dass sich beim Auftreten eines Fehlers in der Datenübertragung oder im übertragenden Medium die Anordnung selbsttätig neu konfiguriert (siehe die Beschreibung zu Fig. 6).

Die Zeit, in der die Token an jeder Steuerstufe 4 der Kommunikationsbausteine 1 vorbeiziehen, d.h. die Token-Umlaufzeit, kann so eingestellt werden, dass sich keine nennenswerten Verzögerungen der normalen Kommunikation ergeben. Da im Normalbetrieb die Schnittstellen der UART-Bausteine 2 dauernd senden, ergibt sich eine Token-Umlaufzeit, die nur linear von der Anzahl der Kommunikationsbausteine im Netz abhängt, und die daher sehr kurz sein kann.

Der Datenspeicher 11 kann auch als Zwischenspeicher eingesetzt werden, wenn im Betrieb in der Kette Daten übermittelt werden sollen, die von Randelementen der Kette reflektiert werden. Dabei werden die Daten zuerst in den Datenspeicher 11 geschrieben, anschliessend wird die Schaltstufe 7 umgeschaltet, und die Daten werden aus dem so als Pufferspeicher wirkenden Datenspeicher 11 wieder ausgelesen und an den UART 2 zur Ausgabe übergeben.

An Hand der Fig. 2 sei die Symbolik erläutert, auf dem ein Netzwerk mit mehreren Kommunikationsbausteinen 1ₐ bis 1_{d} aufbaut. Jeder dieser Kommunikationsbausteine hat zwei Anschlüsse, wobei jeweils der Ausgang in Richtung des Pfeiles zeigt, und sich der Eingang an der gegenüberliegenden Seite befindet.

Die Prozessorelemente der Kommunikationsbausteine befinden sich in einem Programmzustand A, B oder C, je nachdem, ob sich dieser Baustein am linken Ende der von den Bausteinen geformten Kette befindet (Zustand A), in der Mitte der Kette (Zustand C) oder am rechten Ende der Kette (Zustand B).

Die Datenübertragung von einem Kommunikationsbaustein zum anderen ist in Fig. 2 jeweils durch einen Pfeil gekennzeichnet, der bis an den Eingang des empfangenden Kommunikationsbausteines reicht. Der Token, der dabei übertragen wird, ist jeweils oberhalb des Pfeiles eingetragen.

So erhält nach der Darstellung der Fig. 2 der Baustein 1_{Cn+1} ein Telegramm oder einen Token A, der vom Baustein 1_{Cn} gesendet wird. Die Übertragung von einem Baustein zum anderen kann dabei, wie schon erwähnt, auf die verschiedenste Weise, zum Beispiel durch eine Datenleitung, durch Glasfaserleitungen, durch Funkübertragungen od.dgl. erfolgen. Die möglichen Übertragungsrichtungen durch Umschalten der Leitungen 5a, 5b (Fig. 1) mittels der Schaltstufe 7 sind durch Pfeile 5', 5" symbolisiert.

Dieser generelle Richtungssinn wird durch die Abkürzungen CW ("clockwise") und CCW ("counter-clockwise") bezeichnet.

Die Kommunikationsbausteine 1a bis 1d haben ausser einem Hinweis auf ihren Programmzustand (A, B, C) auch noch einen nachgestellten Index, der ihre Nummer in der Kette (oder gegebenenfalls im Ring) kennzeichnet. Im Beispiel der Fig. 2 handelt es ich um m Bausteine, wobei die Nummerierung beim Baustein 1 a im Zustand A1 beginnt.

Nun soll an Hand der Fig. 3 der normale und ungestörte Ablauf beschrieben werden, der sich mit diesen vier Kommunikationsbausteinen der Fig. 2 ergibt, wenn diese als Ring betrieben werden.

Im Diagramm ist die zeitliche Abfolge in untereinander stehenden Zeilen symbolisiert. Dabei steht die Ausgangslage in Fig. 3a, und die darunter befindlichen Fig. 3b bis Fig. 3d bezeichnen die Abläufe und Programmzustände, die sich nacheinander, nach Ablauf einer typischen Taktzeit einstellen, die benötigt wird, um die Daten zu empfangen, die dazugehörigen Rechenoperationen durchzuführen und sie gegebenenfalls weiterzureichen. In den Fig. 3a bis 3d sind demgemäss vier derartige Taktzeiten dargestellt.

In Fig. 3a wird ein Telegramm R vom Baustein R1 an den Baustein R2 abgegeben, der es dann gemäss Fig. 3b weiterreicht. Jeder Kommunikationsbaustein, der eine Nachricht zu versenden hat, wartet ab, bis er das Telegramm R empfängt und hängt danach seine Daten sowie die Adresse des Empfängers oder der Empfänger an. Alle Bausteine, die nicht in der Adressatenliste aufscheinen, reichen das Telegramm unverändert an den nächsten Baustein weiter. Wenn dagegen ein Baustein auf der Adressatenliste vermerkt ist, markiert er die Daten als "konsumiert" und reicht sie ebenfalls weiter.

Somit erhält in Fig. 3b der Baustein R3 vom Baustein R2 das Telegramm R und reicht es gemäss Fig. 3c an den Baustein R4 weiter, der es seinerseits in Fig. 3d wieder an den Baustein R1 weitergibt. Das bedeutet, dass nach einer Telegrammumlaufzeit das Telegramm R wieder beim ursprünglichen Sender R1 ankommt. Dieser kann nun die Datenintegritätsprüfung durchführen sowie die Datenübergabebestätigung (vom Empfänger als 'konsumiert' markiert) prüfen. Bei negativer Prüfung kann, etwa je nach Aufbau des Programmspeichers Pm, zum Beispiel der Vorgang wiederholt werden, oder es kann einer übergeordneten Ebene eine Störung angezeigt werden. Auf die Weiterverarbeitung der Störung wird hier nicht weiter eingegangen, da in diesem Fall die üblichen Strategien und Anzeigen an die weiteren Software-Ebenen geleitet werden bzw. Hardware- Ausgabeelemente das Vorliegen der Störung durch Signale kenntlich machen.

Wenn eine derartige Anordnung mit fest verbundenen Leitungen 5a und 5b einen Kaltstart durchfährt, steht für alle Steuerstufen 4 noch nicht von vorneherein fest, welcher Art ihre Verbindung untereinander ist und welchen Programmzustand sie einnehmen sollen. Denn die Steuerstufen 4 der einzelnen Bausteine können nicht erkennen, ob sie vereinzelt, im Ring oder in einer oder mehreren Ketten verbunden sind.

Die Detektion der Verbindungen erfolgt nun beim Aufstartvorgang gleich wie in einem Fehlerfall.

Dabei stellen alle Bausteine ihre Versandrichtung, vorzugsweise die Richtung CW, ein und senden einen speziellen Token (z.B. C) in diese Richtung. Um zu erkennen, ob es sich um einen Ring handelt oder um eine Kette, werden an diesen speziellen Token Zufallszahlen **rv** angehängt, die die Bausteine in einem Zufallsgenerator Ra (Fig. 1) erzeugen. Dieser Zufallsgenerator Ra ist hier als gesonderter Bauteil dargestellt, kann aber in die Steuerstufe integriert sein bzw. kann von einer entsprechenden Software gebildet sein.

Wenn danach einer der Bausteine nach einer gewissen Zeit nichts empfangen hat, ist er der Master-Baustein einer Kette, geht in den Programmzustand A über und geht dann weiter gemäss demjenigen Programmablauf vor, der unten an Hand der Fig. 4 beschrieben wird.

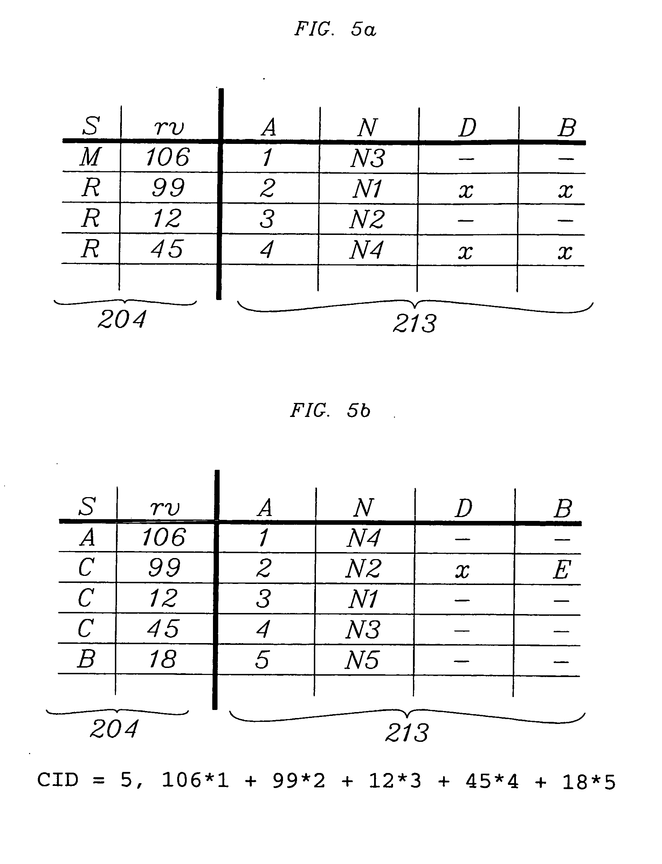

Im Falle eines Ringes empfangen alle Bausteine nach dem Aufstarten Daten. Der Master der Anordnung wird dann gemäss den Zufallszahlen **rv** bestimmt. Jeder Baustein trägt die empfangenen Zufallszahlen **rv** in eine Tabelle NAT (Fig. 5) ein, wobei an Hand der Periodizität der Zahlen darauf geschlossen wird, wie lange diese Kette ist.

Nach einer festen Anzahl von Umläufen, die von den Steuerstufen 4 der Kommunikationsbausteine 1 an Hand der Periodizität der Zufallszahlen **rv** wird nun von allen Bausteinen der Master der Anordnung bestimmt, und dieser beginnt, wie in Fig. 3 gezeigt, zu kommunizieren, indem er an Stelle des Tokens C den Token R sendet. Das Bestimmen des Masters kann vorzugsweise so erfolgen, dass der Kommunikationsbaustein mit der höchsten Zufallszahl **rv** als Master bestimmt wird.

Sollte es sich ergeben, dass zwei Kommunikationsbausteine gleiche Zufallszahlen aufweisen, so kann beispielsweise jener Baustein als Master der Anordnung bestimmt werden, dessen Nachbar in Richtung CW die höchste Zufallszahl aufweist.

Bei der Kommunikation im Ring achten alle Bausteine darauf, dass die Token-Umlaufzeit sich innerhalb vorgegebener Grenzen bewegt, indem sie mit ihren Taktgebern 8 (Fig. 1) durch regelmässiges Ablesen des Registers Rx des Kommunikationsbausteines 1 prüfen, ob ein Token R übertragen wurde. Ist dies nicht der Fall, beginnt jeder Baustein für sich und autonom mit dem Programmablauf im Sinne des oben beschriebenen Kaltstarts. Dadurch wird gewährleistet, dass sich die Anordnung selbst wieder zur längstmöglichen Kette oder zum Ring konfiguriert.

An Hand der Fig. 4 sei nun der Ablauf im Falle einer Kette beschrieben. Dabei kann es sich entweder um eine Anordnung handeln, die ursprünglich als Ring (Fig. 3) konfiguriert war, und bei der ein Segment ausgefallen ist, oder es kann sich um eine Anordnung handeln, die von vorneherein als Kette konzipiert war.

Die Kommunikationsbausteine in der Kette konfigurieren sich nach dem Kaltstart entweder als Innenelemente C2 bis C4 der Kette, oder als linkes Randelement A1 oder aber als rechtes Randelement B5. Dabei ist die Programmierung derart, dass von allen Kommunikationsbausteinen ihre Lage in der Kette selbsttätig erkannt wird. Dies geschieht, indem alle Bausteine nach dem Kaltstart eine vorbestimmte Senderichtung, hier die Richtung CW, einnehmen und einen speziellen Token (etwa C) verschicken. Alle Bausteine, die nun die Token C empfangen, reichen ihn demnach in Richtung CW weiter.

Der Baustein A1 ist daher nach dem Aufstarten der einzige in der Anordnung, der keinen Token C empfangen hat, und nimmt demgemäss den Programmzustand A als Master der Anordnung an. Als solcher macht sich der Baustein A1 dem Rest der Anordnung bekannt, indem er einen Token A in Richtung CW durch die Anordnung schickt. Dieser Token A wird von allen Bausteinen der Kette weitergereicht. Alle Bausteine, die den Token A empfangen haben, schalten nach dem Weiterversand dieses Tokens A die Richtung um und bestätigen den Erhalt des Tokens A in der Gegenrichtung (Richtung CCW), während sie dann auf den Empfang eines Tokens B aus der Richtung CCW warten.

Wenn nun nach einer gewissen Zeit keine Empfangsbestätigung aus der Richtung CCW erfolgt, nimmt der betreffende Baustein den Programmzustand B ein, denn er ist dann am rechten Rand der Kette angesiedelt. Dies macht er dem Rest der Anordnung bekannt, indem er Token B in Richtung CCW verschickt. Der Token B wird danach durch die gesamte Anordnung bis zum Master A durchgereicht.

Nachdem einmal die Token A und B durch die Anordnung gegangen sind, ist diese stabil, und der Datentransfer gemäss Fig. 4a kann beginnen.

Die Fig. 4a bis 4f stellen wiederum den zeitlichen Ablauf der ungestörten Kommunikation dar, wobei Fig. 4a die Ausgangslage veranschaulicht und die Fig. 4b bis 4d die jeweilige Lage nach einer typischen Zeit, die für das Durchschieben der Daten durch einen Kommunikationsbaustein benötigt wird.

In der Ausgangslage gemäss Fig. 4a sind Daten, die im Baustein A1 aus der Richtung CCW ankommen, in einem Pufferspeicher, zweckmässig dem Speicher 11 (Fig. 1), gespeichert. Die Daten werden also aus dem Pufferspeicher ausgelesen und an der Token A angehängt, das seinerseits an den Nachbarbaustein C2 gesendet wird.

In der nachfolgenden Beschreibung wird davon ausgegangen, dass Daten übertragen werden sollen. Natürlich läuft die Kommunikation unter den Kommunikationsbausteinen genau gleich ab, wenn dies nicht der Fall sein sollte; denn dann wird nur der blosse Token ohne angehängte Daten übertragen, und diejenigen Kommunikationsbausteine, welche Daten übertragen wollen, erkennen dies und interpretieren diese Tatsache im Sinne der Bereitschaft der Anordnung, ihre Daten zu übertragen.

Alle Bausteine C2 bis C4, die sich im Programmzustand C befinden, reichen Daten und Token in Richtung CW weiter, wechseln aber danach die Richtung, wie dies aus den Fig. 4b bis 4d ersichtlich ist. In Fig. 4d schreibt dann der Baustein B5 die Daten in seinen Pufferspeicher 11, wechselt danach die Richtung gemäss Fig. 4e und liest die Daten wieder aus dem Pufferspeicher 11 aus, um sie in Richtung CCW zu versenden. Danach werden ab dem Zustand der Fig. 4f alle Daten mit dem Token B in Richtung CCW weitergegeben.

Wie aus Fig. 4 ersichtlich ist, verharrt der Kommunikationsbaustein A1 so lange wie möglich im Richtungssinn, in dem er aus der Richtung CW empfangen kann, wogegen der Kommunikationsbaustein B5 die meiste Zeit in Richtung CW senden kann. Dies wird verwendet, um Andockversuche anderer Ketten zu erkennen (Fig. 6).

Die Daten und Token gehen dabei immer zwischen den Randbausteinen A1 und B5 hin und her. Der Effekt ist, dass alle Token und Daten in regelmässigen Zeitabständen an allen Bausteinen der Anordnung vorbeiziehen. Dabei kann jeder Baustein, der als Adressat der Daten aufscheint, deren Empfang bestätigen, indem er sie als "konsumiert" markiert. Der empfangende Kommunikationsbaustein übergibt danach die Daten über seine Schnittstelle 12 an das an ihn angeschlossene Prozessorelement 13. Jener Baustein, der als Sender der Daten aktiv wurde, kann die Integrität der Daten kontrollieren und auch, ob sie als "konsumiert" markiert wurden. Danach sendet er ein leeres Token, also ohne Daten, weiter. Dieses Token gibt anderen Bausteinen das Recht, ihrerseits Daten an andere Bausteine zu versenden.

Sind die Daten nicht als "konsumiert" markiert, oder ist der Dateninhalt verändert, wird dies erkannt, und es werden jene Massnahmen eingeleitet, die von der übergeordneten Instanz, also im allgemeinen dem Prozessor 13 (Fig. 1) für diesen Fall vorgesehen sind. Beispielsweise kann dieser veranlassen, dass die Nachricht nochmals gesandt wird.

Wie schon erwähnt, überwachen natürlich alle Steuerstufen 4 der Anordnung durch ihren Taktgeber 8 und durch regelmässiges Lesen der Register Rx der Kommunikationsbausteine 1, ob ein Token A oder B in der geforderten Zeit vorkommt. Ist dies nicht der Fall, wird von allen Bausteinen autonom wieder derselbe Programmteil abgefahren wie beim oben beschriebenen Kaltstart. Dadurch können Ketten von Bausteinen, zwischen denen eine Verbindung defekt ist, sich selbsttätig wieder zur längsten möglichen Unterkette konfigurieren und so wenigstens einen Teil des Datenflusses aufrecht erhalten.

In Fig. 5 ist die schon erwähnte Tabelle NAT dargestellt, aus der ersichtlich ist, wie ein externes Prozessorelement 13 mit anderen Prozessorelementen kommuniziert, die über die Schnittstellen 12 an den jeweiligen Kommunikationsbaustein 1 angeschlossen sind. Dabei ist in Fig. 5a eine NAT-Tabelle dargestellt, die einer Situation nach Fig. 3 ent-spricht, in der die Kommunikationsbausteine im Ring vernetzt sind, und in Fig. 5b die entsprechende Situation für eine Kette gemäss Fig. 4.

Wie aus Fig. 5a ersichtlich ist, weist die Tabelle NAT einen Teil 213 auf, der vom Prozessorelement 13 einsehbar ist, sowie einen Teil 204, der nur von den Steuerstufen 4 der Kommunikationsbausteine 1 einsehbar ist. Die Steuerstufen 4 können jedoch auch die Daten 213 der Tabellen NAT einsehen. Natürlich kann es bei manchen Anwendungsfällen von Vorteil sein, die gesamte Tabelle NAT dem Prozessorelement 13 zugänglich zu machen, doch ist dies im allgemeinen nicht erforderlich.

In der Tabelle NAT nach Fig. 5 wird für jeden Kommunikationsbaustein einer Anordnung eine Zeile angelegt. Im Bereiche der privaten Daten 204 der Steuerstufen 4 befindet sich eine Spalte S mit einer Statusinformation, in welche die Programmzustände der beteiligten Kommunikationsbausteine der Anordnung eingetragen werden. In Fig. 5a, welche diejenige Tabelle NAT wiedergibt, die in jedem der Kommunikationsbausteine gemäss Fig. 3 angelegt ist, ist in der Spalte S der erste Baustein als Master M der Anordnung eingetragen, und alle anderen Bausteine sind als im Programmzustand R befindlich markiert.

in einer Spalte rv ist, wie das Bezugszeichen schon sagt, diejenige Zufallszahl eingetragen, die beim Aufstartvorgang generiert und verschickt wurde. Man sieht, dass der Master M, wie bevorzugt, die höchste Zahl aufweist und daher von allen Kommunikationsbausteinen der Anordnung auch als solcher identifiziert wird.

Im von aussen durch das angeschlossene Prozessorelement 13 einsehbaren Bereich 213 der Tabelle NAT sind nur die Spalten mit Adressen A, den symbolischen Namen N der Empfängeradresse D, sowie der Empfangsbestätigung B eingetragen. Natürlich kann die Tabelle NAT gewünschtenfalls auch noch weitere Informationen enthalten; doch wird dies im allgemeinen für die Funktion kaum von Bedeutung sein.

Wenn ein Prozessorelement, z.B. mit dem symbolischen Namen N2 und der Adresse R3, Daten an Empfänger-Elemente N1 und N4 versenden will, markiert es diese in der Tabelle NAT nach Fig. 5a in der Spalte D und übergibt die Daten an den Kommunikationsbaustein R3, an den es angeschlossen ist. Im Kommunikationsbaustein R3 bleiben die Daten im Speicher 11 zwischengespeichert, denn die Steuerstufe 4 wartet ab, bis ein Token R ohne angehängte Daten umläuft, worauf sie die Daten und die Empfängeradresse A an den Token R anhängt und sie versendet.

Die Kommunikationsbausteine R2 und R4 erkennen die Daten an Hand der Adresse A als für sich bestimmt und markieren diese als "konsumiert". Sobald die Daten dann wieder beim Sender R3 ankommen, erkennt dessen Steuerstufe 4, dass sie konsumiert wurden und trägt dies zur Bestätigung in der Spalte B ein.

Wie schon erwähnt, kann neben der blossen Bestätigung auch noch die Integrität der Daten überprüft werden, indem die Steuerstufe 4 des jeweils sendenden Kommunikationsbausteines R3 jeweils eine Kopie der gesendeten Daten abspeichert, um sie dann mit den rücklaufenden Daten vergleichen zu können. Derart kann also zusammen mit der Empfangsbestätigung auch eine Prüfung des Datenfeldes erfolgen, die im positiven Fall bestätigt, dass die Daten unverändert durch die Anordnung gesendet wurden.

Im Beispiel der Fig. 5b ist die Tabelle **NAT** entsprechend der Fig. 4 abgebildet. Die Anordnung besteht aus den Kommunikationsbausteinen A1, C2, C3, C4 und B5, wobei A1 der Master der Anordnung ist. Die Kommunikationsbausteine C befinden sich in der Mitte der Anordnung und der Baustein B5 am rechten Rand der Kette.

In Fig. 5b ist der Fall dargestellt, dass einer der Kommunikationsbausteine eine Meldung überträgt, die dann nicht erfolgreich übergeben werden konnte. Zwar wurde der Kommunikationsbaustein C2 in der Spalte D als Empfänger markiert, doch wurde vom versendenden Baustein die Fehlermeldung E in die Spalte für die Bestätigungen eingetragen.

Der Ablauf beim Versand erfolgt dabei genau gleich, wie es oben an Hand der Fig. 5a für den Fall eines Ringes beschrieben wurde.

Unterhalb der Fig. 5b steht eine bevorzugte Methode zur Berechnung einer Kettenidentifikationszahl CID. Sie besteht aus zwei Teilen: einem Teil, der die Anzahl der Kommunikationsbausteine beschreibt (das sind im Beispiel der Fig. 5a fünf), und einem, der aus den Zufallszahlen **rv** mit der Adresse A multiplizierte Summanden addiert. Dadurch wird die Wahrscheinlichkeit sehr klein, dass zwei gleich lange, unabhängige Ketten zum gleichen Resultat kommen, und die Kette kann davon ausgehen, dass ein Andockversuch mit dieser CID von ihr selbst kommt.

In Fig. 6 ist der Fall dargestellt, in dem zwei Anordnungen 9a und 9b sich als Kette konfiguriert haben, wobei die Kette 9a aus den Bausteinen 101-1 bis 101-n besteht, und die Kette 9b aus den Bausteinen 102-1 bis 102-m. Die Anzahl der Bausteine m und n, aus denen die beiden Ketten aufgebaut sind, ist dabei unerheblich für den Fall, dass sich beide Ketten zu einer einzigen, längeren fusionieren. Dabei werden nach der Fusion die Ketten ihre jeweilige Tabelle **NAT** 14a, 14b austauschen und zu einer gemeinsamen, die Daten aller Kommunikationsbausteine 1 enthaltenden Tabelle 14d fusionieren.

Dabei sind in Fig. 6, wie ersichtlich nur die jeweiligen Randelemente gezeichnet, wogegen sich dazwischen eine beliebige Anzahl von Bausteinen sich im Programmzustand C befinden. Angenommen sei, dass alle Bausteine der beiden Ketten 9a, 9b untereinander verbunden sind, sei es durch Funk oder, bevorzugt, durch Leitungen. So befindet sich zwischen den Ketten 9a und 9b eine Leitung 5c, die durch einen Schalter S1 getrennt sein kann. Vom Schalter S2, der beide Ketten zu einem Ring verbinden würde, wird in der weiteren Beschreibung angenommen, er sei offen.

Natürlich kann an Stelle der Schalter S1, S2, jeweils auch eine Unterbrechung der Leitung, oder ein Kurzschluss auf andere Weise auftreten; dies hat denselben Effekt. Die Fig. 6 soll zeigen, welche Abläufe im Programmspeicher der Steuereinheiten 4 der beteiligten Bausteine ablaufen, wenn der Schalter S1 geschlossen.wird und sich beide Ketten zu einer einzigen, längeren Kette verbinden.

Nun befinden sich die Randelemente A und B einer erfindungsgemäss ausgestalteten Kette (Fig. 4) in einem Zustand, in dem das Element A die meiste Zeit aus der Richtung CCW empfangsbereit ist, und das Element B die meiste Zeit in Richtung CW senden kann. Dies wird dazu benutzt, Andockversuche einer anderen Kette zu detektieren. Dazu sendet der Baustein 101-n der Kette 9a, wenn immer möglich, einen speziellen Token in Richtung CW, und dreht dann die Richtung, um zu erfassen, ob ein Randelement einer anderen Kette diesen Andockversuch quittiert.

Das Element bzw. der Baustein A bzw. 102.1 einer anderen Kette 9b, das einen Andockversuch bemerkt, dreht durch Umschalten der Schaltstufe 7 die Richtung und quittiert diesen Versuch. Dadurch ist es möglich, dass die beiden Bausteine 101-n und 102-1 einander gegenseitig den Andockversuch bestätigen. Darauf wird der Baustein 101-n einen speziellen Token, z.B. einen Token D, durch seine Kette 9a schicken, wodurch alle Bausteine dieser Kette 9a vom quittierten Andockversuch benachrichtigt werden. Insbesondere wird der Master der Kette 9a, der Baustein 101-1 vom Andockversuch benachrichtigt und als neuer Master der nun verlängerten Kette 9a + 9b bestimmt. Ebenso wird der Baustein 102-1 durch die Kette 9b hindurch die Information verbreiten, dass ein Andockversuch bevorsteht, und dass auf die Kontaktaufnahme durch den neuen Master 101-1 der verlängerten Kette 9a + 9b gewartet werden muss.

Alle Bausteine im Programmzustand C (die in Fig. 6 nicht dargestellt sind) erkennen auf Grund des Tokens D, dass der neue Master 101-1 der Anordnung, der sich im Zustand A befindet, nun senden wird und drehen über ihre Schaltstufen 7 die Richtung derart, dass sie von der Richtung CW aus empfangsbereit sind. Zweckmässig senden die Randelemente 101-n und 102-1 neben dem speziellen Token D auch Daten über die Anzahl der Elemente und gegebenenfalls andere nützliche Informationen, mit der die neu fusionierte Kette nach dem Schliessen der Unterbrechung am Schalter S1 die Funktion zügig aufnehmen kann.

Nach dem Versand der speziellen Token D gehen die beiden Randelemente 101-n und 102-1, die den Kontakt aufgenommen haben, vom Programmzustand B (Baustein 101-n) bzw. A (Baustein 102-1) in den Programmzustand C über, weil sie sich ja nun in der Mitte der fusionierten Kette 9a, 9b befinden.

Die neu gebildete, verlängerte Kette, welche aus den Bausteinen der fusionierten Ketten 9a und 9b besteht, ist nun betriebsbereit, und Daten können so transportiert werden, wie dies an Hand der Fig. 4 beschrieben wurde. Schliesst sich aber auch der Schalter S2, dann entsteht ein Ring, in dem alle Bausteine miteinander verbunden sind.

Im Prinzip ist vorgesehen, dass bei diesen Vorgängen von allen Steuerstufen 4 der Bausteine genau derselbe Programmablauf durchfahren wird, wie im Falle des Andockens an eine andere Kette. Tatsächlich kann es jedoch bei Ketten gleicher Länge zu Problemen kommen, da zwischen zwei verschiedenen fusionierenden Ketten und einer sich selbst schliessenden Kette nicht einfach unterschieden werden kann. Für einen solchen Fall ist die Bildung der bereits geschilderten Kettenidentitätsnummer CID von Vorteil, die - wie schon erwähnt - aus der Anzahl ihrer Bausteine und aus zufälligen Zahlen rv besteht, welche die jeweiligen Steuerstufen 4 aus ihren Zufallsgeneratoren Ra beziehen. Daher ist das Programm zweckmässig so aufgebaut, dass beim Andockversuch sofort die Kettenidentitätsnummer CID übergeben wird. Dadurch kann die Kette und ihre Bausteine auf einfache Art jeweils erkennen, dass sie sich schliesst.

Im Falle der Fig. 6 erfolgt beim Schliessen des Schalters S2 ein Andockversuch zwischen dem Baustein 102-m im Programmzustand B als Sender und dem Baustein 101-1 im Programmzustand A als Empfänger. Danach quittiert der Baustein 101-1 im Zustand A den Empfang und stellt fest, dass die eigene CID übergeben wurde. Er wird daher Master einer Ringanordnung und beginnt, auf Grund seiner Programmierung, bei nächster Gelegenheit an Stelle des Tokens A den Token R zu senden. Dadurch geht die gesamte Anordnung in die stabile Ring-Konfiguration über (Fig. 3).

Falls nun ein Segment des an Hand der Fig. 3 beschriebenen Ringes, der an sich eine beliebige Anzahl von Bausteinen enthalten kann, ausfällt oder gestört ist, durchlaufen alle Bausteine dieselbe Programmsequenz, die auch beim Kaltstart durchlaufen wird. Der Ausfall kann natürlich sowohl einen Baustein als auch die verbindende Datenleitung oder die Funkübertragung betreffen. Ebenso verhält es sich, wenn ein Segment der Kette nach Fig. 4 ausfällt oder gestört ist: alle Bausteine durchlaufen dieselbe Programmsequenz, die auch beim Kaltstart durchlaufen wird.

Dadurch beschränkt sich die Programmfunktion, die dem erfindungsgemässen Netzwerk eine Fehlertoleranz verleiht, auf die Überwachung der Wiederkehr der umlaufenden Token. Wenn ein Baustein im Netzwerk den Token nicht zum vorgesehenen Zeitpunkt (allenfalls zuzüglich einer gewissen Toleranz- und Sicherheitsmarge) vorfindet, leitet er selbsttätig - gemäss Programm - die Aufstart-Programmsequenz ein. Dies führt dann, wie oben gezeigt, entweder zur längsten möglichen Kette oder zu einem Ring.

Natürlich ist das Programm zweckmässig so ausgebildet, dass es - wenn Teile der Reihe von Kommunikationsbausteinen sich zu einzelnen Ketten zusammenschliessen, danach zur Fusion dieser Ketten kommt, wobei sich immer die jeweils längstmögliche Kette einstellt und daher die Übertragung von Daten zwischen einer möglichst grossen Anzahl von Bausteinen möglich ist. Dies - wie ersichtlich - ergibt sich aus der besonderen Art der Kommunikationsbausteine gemäss Fig. 1, bei denen eine Richtungsumkehr über die Schaltstufen 7 vorgesehen ist. Es versteht sich, dass die Kette sich, wie oben gezeigt, ringförmig auch auf sich selber schliessen kann, worin wieder ein Segment ausfallen kann, ohne dass die prinzipielle Funktion beeinträchtigt wird.

## Patentansprüche

1. Verfahren zum Betrieb eines Netzwerkes aus mehreren zu Ketten verbindbaren Kommunikationsbausteinen (1) bei dem in einem Kommunikationsbaustein (1) über einen Taktgeber (8) und eine Steuereinrichtung (4) die zeitliche Abfolge des von einem Basis-Baustein (2), vorzugsweise in einem Register (Rx) desselben, empfangenen Datenstroms bestimmt wird, wobei je nach dem regelmässigen Auftreten eines vorbestimmten Tokens von der Steuereinrichtung die Kommunikationsrichtung bestimmt wird, **dadurch gekennzeichnet, dass**
a) jeder Kommunikationsbaustein (1) ihm zugeordnete bzw. in ihm generierte Zufallszahlen an das empfangene Token anhängt, wobei nach einer Anzahl von Umläufen anhand der Periodizität der empfangenen Zufallszahlen eine Auswahl oder Vorauswahl des Masters im Ring vorgenommen wird, wobei der oder die Kommunikationsbaustein(e) mit der bzw. den höchsten Zufallszahl(en) als Master ausgewählt werden und eine Vorauswahl - falls mehrere Kommunikationsbausteine mit gleich hoher Zufallszahl vorausgewählt wurden - auf jenen Kommunikationsbaustein (1) eingegrenzt wird, dessen Nachbar die höchste Zufallszahl aufweist, sowie
b) jedem Kommunikationsbaustein (1) zugeordnete bzw. in ihm generierte Zufallszahlen dazu verwendet werden, um eine Kettenidentifikationszahl CID zu bilden, die aus zwei Teilen besteht, wobei der eine Teil die Anzahl der Kommunikationsbausteine (1) jeder Kette angibt, aus denen sie aufgebaut ist, und der andere Teil aus den Zufallszahlen (rv) der Kommunikationsbausteine (1) berechnet wird, und dass diese CID dazu verwendet wird, um
b1) zwei unabhängige Ketten zu fusionieren, indem sie diese Kettenidentifikationszahl CID gegenseitig austauschen und an alle Kommunikationsbausteine (1) übermitteln, aus denen die Ketten aufgebaut sind, und sie nach der Fusion ihre jeweiligen Adresstabellen austauschen und zu einer gemeinsamen, alle Kommunikationsbausteine (1) enthaltenden Tabelle (14d) fusionieren und/oder
b2) das Schliessen der Kette auf sich selbst zu einem Ring durch einen Kommunikationskanal (5d) zu erkennen.

2. Verfahren nach Anspruch 1, **dadurch gekennzeichnet, dass** die Richtungssinne der einzelnen Kommunikationsbausteine (1) durch ihre Steuereinrichtungen (4) so gesteuert werden, dass zwischen den jeweiligen Basis-Bausteinen (2) über gegenüberliegende Kommunikationskanäle (5a, 5b) durch Umkehr des Richtungssinnes untereinander Daten austauschbar sind.

3. Verfahren nach Anspruche 1 oder 2, **dadurch gekennzeichnet, dass** jene Kommunikationsbausteine (A, B), die sich am Anfang oder am Ende einer Kette befinden, die Daten in einem Pufferspeicher (11) zwischenspeichern, wobei nach Empfang alle Kommunikationsbausteine (1) den Richtungssinn des Datenverkehrs umkehren, die Daten im Gegensinn zurückschicken und danach synchron den gleichen Vorgang in umgekehrter Reihenfolge wiederholen.

4. Verfahren nach einem der Ansprüche 1 bis 3, **dadurch gekennzeichnet, dass** jeder Kommunikationsbaustein (1) eine Schnittstelle (12) aufweist, über die ein angeschlossener Computer oder Prozessorelement (13) in einer Tabelle **NAT** (14a) alle, in einer Kette oder einem Ring verbundenen Kommunikationsbausteine (1) einsehen kann, und in die jeder an einen Kommunikationsbaustein (1) angeschlossene Computer (13) einen symbolischen Namen eintragen kann, der als Adresse dient, unter der er durch die anderen Kommunikationsbausteine (1) erreichbar ist, wobei dieselbe Tabelle NAT in allen Kommunikationsbausteinen der Kette oder des Rings vorhanden ist.

5. Verfahren nach einem der Ansprüche 1 bis 4, **dadurch gekennzeichnet, dass** das Verfahren beim Aufstartvorgang des Netzwerkes gleich wie in einem Fehlerfall erfolgt.

## Claims

1. A method for operation of a network of a plurality of communication components (1) connectable to chains, wherein the temporal succession of a data stream received from a base component, preferably in a register (Rx) of the same, is determined in a communication component (1) via a clock generator (8) and control means (4), the communication direction being determined by the control means in dependence on the regular appearance of a predetermined token, **characterised in that**
a) each communication component (1) add to the received token random numbers associated to or generated in the communication component (1), a selection or pre-selection of the master within the ring being effected after a number of tours on the basis of the periodicity of the random numbers received, wherein the communication component(s), which have the highest random number(s) is (are) selected as the master, and a pre-selection, if several communication components having a random number of the same height, have been selected, is contained to that communication component (1), whose neighbour comprises the highest random number, and that
b) random numbers, which are either associated to each one of the communication components (1) or are generated in it, are used to form a chain identification number CID, which consists of two parts, one part indicating the number of communication components (1) of each chain, by which it is built up, while the other part is calculated from the random numbers (rv) of the communication components (1), und that this CID is used
b1) to combine two independent chains by mutually exchanging these chain identification numbers CID and by transferring them to all communication components (1), by which they are built up, and after combining they exchange their respective address tables and combine them to a common table (14d) which contains all communication components (1) and/or
b2) to recognise closing of the chain onto itself to form a ring through a communication channel (5d).

2. Method according to claim 1, **characterised in that** the senses of direction of the individual communication components (1) are controlled by their control means (4) in such a manner that data are mutually exchangeable between the respective base components (2) via opposite communication channels (5a, 5b) by reversal of the sense of direction.

3. Method according to claim 1 or 2, **characterised in that** those communication components (A, B), which are situated at the beginning or at the end of a chain, buffer the data in a buffer memory (11), wherein, after receipt, all communication components (1) reverse the sense of direction of the data traffic, send back the data in counter-direction and afterwards repeat the procedure synchronously in contrary succession.

4. Method according to any of claims 1 to 3, **characterised in that** each communication component (1) has an interface (12), over which a connected computer or a processor element (13) is able to take an insight of all communication components (1) connected in a chain or in a ring in a table NAT (14a), and into which each computer (13) connected to a communication component (1) may enter a symbolic name, which serves as an address, under which it is approachable by the other communication components (1), the same table NAT being present in all communication components od the chain or of the ring.

5. Method according to any of claims 1 to 4, **characterised in that** the method is effected every time the network is switched on in the same way as in the case of a failure.

## Revendications

1. Procédé de fonctionnement d'un réseau formé de plusieurs composants de communication, qui sont capables d'être connectés à former des chaînes, dans lequel la succession temporelle du train de données reçu est déterminée à travers un générateur d'horloge (8) et un dispositif de commande (4) par un composant de base (2), de préférence dans un registre (Rx) de ceci, dans lequel la direction de communication est déterminée par le dispositif de commande en dépendance de l'apparition régulière d'un jeton prédéterminé, **caractérisée en ce, que**
a) chaque composant de communication (1) ajoute des nombres aléatoires associés à lui ou générés dans lui-même au jeton reçu, dans lequel après un nombre de circulations une sélection ou une présélection du mastère dans l'anneau est effectuée à l'aide de la périodicité des nombres aléatoires reçus, dans lequel ce ou ces composant(s) de communication est/sont sélectionnés, qui ont les nombres aléatoires plus grands, et une présélection, en cas que l'on a présélectionné plusieurs composants de communication ayant un nombre aléatoire égale, est limité à ce composant de communication (1), dont le voisin comprend le nombre aléatoire plus grand, et
b) que les nombres aléatoires associés à chaque composant de communication (1) ou générés dans celui-ci sont utilisés à former un nombre d'identification de chaîne CID, qui consiste de deux parts, l'une de ces parts indiquant le nombre de composants de communication (1) de chaque chaîne, duquels il est constitué, tandis que l'autre part est calculé des nombres aléatoires (rv) des composants de communication (1), et que ces CID sont utilisés pour
b1) combiner deux chaînes indépendantes, en échangeant mutuellement ce nombre d'identification de chaîne CID et en transférant à tous les composants de communication (1), dont les chaînes sont constitués, et après la combinaison ils échangent leurs tables d'adresses respectifs en les combinant à former un table commun (14d), qui contient tous les composants de communication (1) et/ou
b2) pour reconnaître la fermeture de la chaîne sur soi-même à former un anneau par un canal de communication (5d).

2. Procédé selon la revendication 1, **caractérisé en ce, que** les sens de direction des composants individuels de communication (1) sont commandés par leurs dispositifs de commande (4) d'une manière, que des donnés sont échangeables entre les composants de base respectifs (2) à travers des canaux de communication (5a, 5b) opposés par une inversion du sens de direction.

3. Procédé selon les revendications 1 ou 2, **caractérisé en ce, que** ceux composants de communication (A, B), qui sont situés au commencement d'une chaîne ou à la fin, enregistrent les données temporairement dans un mémoire d'accumulation (11), dans lequel tous les composants de communication (1) inversent le sens de direction du trafic de données après réception, revoient les données en sens inverse et après répètent le même processus d'une manière synchrone avec une succession inversée.

4. Procédé selon une quelconque des revendications 1 à 3, **caractérisé en ce, que** chaque composant de communication (1) comprend un interface (12), un ordinateur ou un élément de processeur (13) connecté peut consulter tous les composants de communication (1), connectés dans une chaîne ou un anneau, dans un table NAT (14a), et dans lequel chaque ordinateur (13) connecté à un composant de communication (1) peut entrer un nom symbolique, qui serve d'adresse, sous laquelle il est accessible par les autres composants de communication (1), le même table NAT étant présent dans tous les autres composants de communication de la chaîne ou de l'anneau.

5. Procédé selon une quelconque des revendications 1 à 4, **caractérisé en ce, que** le procédé est effectué de la même manière pendant le démarrage du réseau que en cas d'un défaut.
